# EUROPÄISCHE PATENTSCHRIFT

(11) **EP 0 447 649 B1**
(45) Veröffentlichungstag und Bekanntmachung des Hinweises auf die Patenterteilung: **31.08.1994**
(21) Anmeldenummer: 90124504.3
(22) Anmeldetag: 18.12.1990
(51) Int. Cl.: B09B 1/00, E02D 31/00

(54) **Anordnung zur Abdeckung geneigter Schüttstoffflächen**
Arrangement for covering sloping surfaces of bulk material
Dispositif de recouvrement des surfaces inclinées de matériaux en vrac

(30) Priorität: 19.03.1990 DE 4008791
(43) Veröffentlichungstag der Anmeldung: 25.09.1991
(73) Patentinhaber: BAYER AG, 51368 Leverkusen (DE); SLT LINING TECHNOLOGY GmbH, D-21107 Hamburg (DE)
(72) Erfinder: Fuhr, Hartmut, Dr., W-5090 Leverkusen 3 (DE); Koglin, Bernd, Prof. Dr., W-5060 Bergisch Gladbach 2 (DE); Rink, Rolf, W-5000 Köln 80 (DE); Schäfer, Josef, Dipl.-Ing., W-5090 Leverkusen 1 (DE); Vogel, Wolfgang, Dipl.-Ing., W-5200 Siegburg (DE); Krause, Rudolf, Dr.-Ing., W-2110 Buchholz (DE)
(74) Vertreter: Kirchner, Dietrich, Dr.

(56) Entgegenhaltungen:
- EP-A- 0 249 921
- EP-A- 0 259 165
- DE-A- 3 444 895
- DE-A- 3 622 559

## Beschreibung

Die Erfindung betrifft eine Anordnung zur Abdeckung der gegebenenfalls geneigten Oberfläche von Schüttstoffen, insbesondere Erdreich oder Deponiegut, die eine zumindest oberseitig haftrauhe, mit einer textilen Matte abgedeckten Dichtbahn und darüber eine Deckschüttung umfaßt.

Es ist bekannt, durch Aufrauhung der Oberseite einer Dichtbahn die Haftung einer aufliegenden Erdschicht zu verbessern (DE-OS 36 22 559). Die dadurch erzielbare Erhöhung der Haftfähigkeit stößt jedoch an Grenzen, wenn der Neigungswinkel hoch ist oder das Deckmaterial grob (Kies) oder die angreifenden Kräfte (Sturzregen, Wind) beträchtlich sind. Das gilt insbesondere bei großflächigen Abdeckungen, wie sie bei Deponien vorkommen (DE-OS 34 15 729) und bei dünner Deckschüttung, die bei Zwischenabdeckungen in Deponien (DE-OS 25 42 999) für die Geringhaltung des Volumenverlusts wünschenswert ist (DE-OS 36 41 780). Es ist ferner bekannt (siehe Müll und Abfall, 21 (1989) S. 405-415), eine oberflächenrauhe Dichtbahn mit einer Matte aus Geotextil abzudecken und darauf die Deckschüttung abzulagern. In diesem Artikel werden Reibungsversuche mit unterschiedlicher Oberflächenrauhigkeit auf Geotextil beschrieben.

Hier setzt die Erfindung an. Es lag die Aufgabe zugrunde, die Haftung der Deckschüttung an der Dichtbahn zu verbessern.

Diese Aufgabe wird erfindungsgemäß dadurch gelöst, daß bei einer mit einer textilen Matte abgedeckten haftrauhen Dichtbahn die textile Matte als Haftvlies ausgebildet ist, dessen der Dichtbahn zugewendete, offene Oberfläche freie Fasern umfaßt, deren Durchmesser geringer ist als die Rauhtiefe der Dichtbahnoberfläche und daß darauf eine mit dem Haftvlies verbundene Haltematte angeordnet ist, deren Oberseite Vertiefungen aufweist, deren Größe mindestens etwa so groß ist wie die Korngröße einer wesentlichen Kornfraktion der Deckschüttung.

Die erfindungsgemäße Zwischenlage aus Haftvlies und Haltematte schafft unterschiedliche Haftvoraussetzungen an der Dichtbahn einerseits und der Deckschüttung andererseits. Die Fasern des Haftvlieses verhaken sich mit den die Rauhigkeit der Dichtbahn bildenden Oberflächenvorsprüngen, während die Haltematte mit ihrer gröberen Struktur der Verbindung mit der Deckschüttung dient.

Eine besonders gute Haftung des Haftvlieses an der Dichtbahn wird dann erreicht, wenn die Haftrauhigkeit der Dichtbahnoberfläche durch damit verbundene, vorspringende Körper gebildet ist, deren mittlere Höhe unter 2 mm, zweckmäßigerweise auch unter 1 mm, liegt. Zweckmäßigerweise werden diese Körper von mit der Dichtbahnoberfläche verschweißten Sprühpartikeln gebildet, wie sie gemäß DE-OS 36 22 559 erzielt werden, indem flüssiges, thermoplastisches Material unter gleichzeitig feiner Verteilung gegen die Oberfläche der Dichtbahn geschnellt wird. Die einzelnen Körper, die Perlen- bis Wurmgestalt haben, gehen dabei eine Art Schweißverbindung mit der Dichtbahn ein, die ihnen hinreichende Haltekraft gewährt, ohne daß sie ihre im Sprühvorgang angenommene Gestalt grundsätzlich verlieren. Sie bilden daher auch Hinterschneidungen oder andere Formunregelmäßigkeiten, an denen sich die Fasern des Haftvlieses verankern, insbesondere verhaken können. Damit diese Verankerung bzw. Verhakung stattfinden kann, müssen die Fasern des Vlieses hinreichend dünn und - unbeschadet ihrer Verankerung im Vlies - hinreichend frei beweglich sein. Beispielsweise darf die Vliesoberfläche nicht durch thermische Pressung des Vlieses derart eingeebnet und durch vielfache Verbindung benachbarter Fasern verfestigt sein, daß die Vliesoberfläche glatt, fest und/oder weitgehend geschlossen ist und daher keine freien Faserabschnitte für das Zusammenwirken mit der Dichtbahnoberfläche zur Verfügung stehen. In Abgrenzung von derartigen ungeeigneten Vliesen wird daher die Oberfläche der geeigneten Vliese als offen bezeichnet und werden die darin zur Verankerung an Rauhigkeiten der Dichtbahn geeigneten Fasern als frei bezeichnet.

Damit die Fasern sich umso leichter verankern können, ist ihr Durchmesser vorzugsweise geringer als ein Drittel der Rauhtiefe der Dichtbahnoberfläche, vorzugsweise in der Größenordnung von einem Zehntel der Rauhtiefe und weniger. Die Vliesoberfläche soll weich sein, so daß die Fasern sich in die Rauhigkeitsvertiefungen einschmiegen können.

Einen besonders guten Verbund mit der Deckschüttung erzielt man dann, wenn die Haltematte von einem groben Vlies oder Netz gebildet ist, wobei dieses einen mittleren Faser- bzw. Strangabstand haben soll, der größer ist als die geringste wesentliche Korngröße der Deckschüttung. Unter wesentlich im Sinne der Erfindung ist eine solche Kornfraktion zu verstehen, die darin in so großer Menge enthalten ist, daß die Vertiefungen der Haltematte soweit sie oberflächennah sind und sich zur Oberfläche hin öffnen, davon und von den teilweise in die Vertiefungen eindringenden Bestandteilen der größeren Fraktionen weitgehend (vorzugsweise zu mehr als 50%) gefüllt werden können. Gute Ergebnisse werden mit einer Matte erzielt, deren mittlerer Faserabstand mindestens 2 mm beträgt, wenn die Deckschüttung von Erdreich, Sand oder Kies (Korngröße ab 2 mm) verwendet wird.

Sehr vorteilhaft ist auch eine Ausführung, bei der die Haltematte eine waffelartige Prägung aufweist, das heißt eine Vielzahl von über schmale Stege voneinander getrennte, nach unten konisch zulaufende Vertiefungen aufweist, deren Vertiefungsabmessungen größer sind als die geringste wesentliche Korngröße der Deckschüttung. Zweckmäßigerweise sind die mittleren Vertiefungsabmessungen, gemessen in der Mattenoberfläche parallel zur Mattenebene, größer als 5 mm.

Als besonders zweckmäßig hat sich eine Haltematte erwiesen, die an der Oberseite Fasern oder Stränge von drahtartiger Steifigkeit aufweist, wodurch sichergestellt ist, daß Verankerungszwischenräume auch unter der Last der Deckschüttung erhalten bleiben. Hinreichende Steifigkeit im Sinne dieses Merkmals haben beispielsweise Niederdruckpolyethylen-Monofilamente, deren Durchmesser größer als 0,2 mm ist und vorzugsweise in der Größenordnung von 0,5 mm liegt.

Jedoch kann ein guter Verbund zwischen Haltematte und Deckschüttung auch dann erzielt werden, wenn die Haltematte besonders weich und nachgiebig ausgebildet ist, so daß einzelne Vliese sich in eingedrückte Vertiefungen der Matte betten und darin verankern können. Diese unmittelbar verankerten Partikeln führen dann zur mittelbaren Verankerung weiterer Partikeln. Um in dieser Weise wirken zu können, soll die Haltematte sehr weich sein, nämlich durch 10 g/cm² um mindestens 5 mm zusammendrückbar sein. Ihre Dicke soll mindestens 10 mm betragen.

Um hinreichend Verankerungsvolumen zu bieten, soll die Haltematte im entspannten Zustand ein Hohlraumvolumen von mindestens 90%, vorzugsweise mindestens 95% aufweisen.

Vorteilhaft ist eine Haltematte, die ein Wirrgelege von an den Kreuzungspunkten miteinander verbundenen Monofilamenten umfaßt, deren Dicke mindestens etwa 1/100 der Mattendicke beträgt.

Die Haltematte und das Haftvlies sind zweckmäßigerweise fest, beispielsweise durch Verschweißung, miteinander verbunden. Auf eine solche feste Verbindung kann verzichtet werden, wenn ihre Haftreibung auch ohne derartige Maßnahmen hoch genug ist.

Geeignete Haftvliese und Haltematten sind als Geotextilien im Handel, nämlich als Filterelemente bzw. Dränschichten. Sie sind auch im miteinander verschweißten Zustand erhältlich.

Es ist bekannt, zur Bildung einer Dränageschicht auf einer Dichtbahn derartige Geotextilien zu verwenden (DE-OS 34 44 895). Jedoch wird dabei - umgekehrt im Verhältnis zum Erfindungsgedanken - die grobe Dränageschicht unten und die feine Vliesschicht oben angeordnet. Zwar ist dabei vorgesehen, daß eine Erdschüttung als Vegetationsschicht aufgebracht wird; gesteigerte Haftung kann dabei jedoch nicht erwartet werden. Zwischen der Dränageschicht und der Dichtbahn ist Verschweißung vorgesehen, da anderenfalls an dieser Stelle erhöhte Gleitfähigkeit zu befürchten wäre.

Auch die erfindungsgemäße Vlieskombination ist dränfähig, da die Vlieskombination, ggf. auch eine daraufliegende Kiesschicht, hinreichende Dränquerschnitte bildet, durch die Wasser auf der darunterliegenden Dichtungsbahn abgeführt und einer geordneten Dränage zugeführt werden kann. Dies ist von besonderer Bedeutung für die Verwendung der erfindungsgemäßen Anordnung für Zwischenabdichtungen in Deponien, die dränierfähig sein sollen und damit (ohne nachträgliche Zerstörung) im Deponiekörper verbleiben können. Wenn anderenfalls die Gefahr besteht, daß die in der Vliesanordnung vorhandenen Dränquerschnitte durch Einschlämmen von Feinteilen ganz oder teilweise verschlossen werden, kann vorgesehen sein, daß zwischen dem Haftvlies und der Haltematte noch eine weitere Dränageschicht eingeschaltet ist, die in Übereinstimmung mit dem Stand der Technik aus einer oberen Filterschicht und einer unteren groben Vliesschicht besteht. Dies ändert nichts daran, daß die erfindungsgemäße Haftschicht unmittelbar der Dichtbahn aufliegt, während die Haltematte die oberste Schicht zur Verbindung mit der Deckschüttung bildet. Im allgemeinen ist jedoch eine solche zusätzliche Dränanordnung nicht erforderlich und könne das Haftvlies und die Haltematte unmittelbar miteinander verbunden werden.

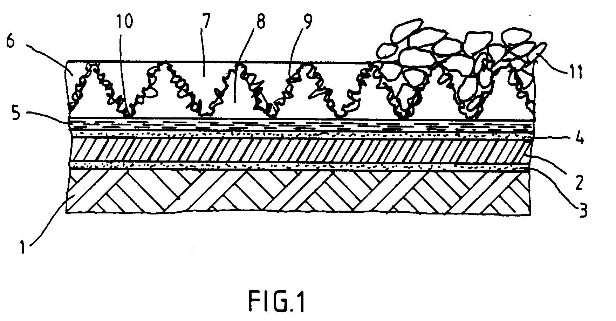

Die Erfindung wird im folgenden näher unter Bezugnahme auf die Zeichnung erläutert, die ein Ausführungsbeispiel im schematischen Vertikalschnitt zeigt.

Auf dem abzudeckenden Material 1, das eine Deponie sein kann und ggf. mit Gassammlern ausgerüstet ist, ist die Dichtbahn 2 verlegt, die auf beiden Oberflächen durch aufgesprühte und damit fest verbundene Partikeln gebildete Rauhschichten 3 bzw. 4 trägt. Darauf liegt das Haftvlies 5, das von einer geotextilen Filterschicht gebildet ist, nämlich einem weichen, feinfasrigen Polyestervlies mit einer Dicke der Stapelfasern unter 0,02 mm, das lediglich mechanisch, nicht aber thermisch verfestigt ist. Darüber liegt die Haltematte 6, die als Wirrfaserschicht auf 0,5 mm dicken Filamenten mit einer Dicke von 15 bis 20 mm und einem Quadratmetergewicht von 400 Gramm ausgebildet ist. Sie ist mit einem Waffelmuster geprägt, das heißt, beide Seiten sind mit quadratkegelförmigen, gegeneinander versetzten Vertiefungen 7, 8 versehen. Dazwischen bilden sich Stege 9, in denen sich die Monofilamente überwiegend befinden. In den Punkten 10 ist die hatte 6 mit dem Vlies 5 verschweißt oder verheftet.

Auf die hatte 6 ist die Deckschüttung 11 als Kiesschüttung aufgebracht.

Die unterseitige Rauhschicht 3 der Dichtbahn 2 bildet einen haftfesten Verbund mit dem Deponiegut 1. Die oberseitige Rauhschicht 4 bildet einen haftfesten Verbund mit dem Haftvlies 5, dessen Fasern sich an den Partikeln der Rauhschicht 4 teilweise verhaken. Die Haltematte 6 bildet einen haftfesten Verbund mit der Deckschüttung 11. Versuche haben gezeigt, daß selbst unter widrigen Bedingungen Böschungen mit einem Böschungswinkel von 35° mit dieser Anordnung haftsicher abgedeckt werden können.

Die im Beispiel vorgesehene Prägevertiefungen 7 sind für die Haftverbindung mit der Deckschüttung 11 nicht unbedingte erforderlich, wenn auch vorteilhaft. Zur Bildung der Vertiefungen in der Matte 6, in denen sich die Partikeln der Deckschüttung 11 verankern können, genügt meist auch der grobe Faserabstand.

Eine besondere Dränanordnung zwischen der Deckschüttung 11 und der Dichtbahn 2 ist in der Regel nicht erforderlich, da diese Funktion von den Schichten 5 und 6 hinreichend übernommen werden kann. In Ausnahmefällen kann zwischen den Schichten 5 und 6 noch eine besondere, mit diesen Schichten hinreichend verbundene Dränschicht angeordnet werden.

## Patentansprüche

1. Anordnung zur Abdeckung der gegebenenfalls geneigten Oberfläche von Schüttstoff, insbesondere Erdreich oder Deponiegut, die eine zumindest oberseitig haftrauhe, mit einer textilen Maffe abgedeckten Dichtbahn und darüber eine Deckschüttung umfaßt, dadurch gekennzeichnet, daß die textile Matte als Haftvlies (5) ausgebildet ist, dessen der Dichtbahn zugewendete, offene Oberfläche freie Fasern umfaßt, deren Durchmesser geringer als die Rauhtiefe der Dichtbahnoberfläche (4) ist, und darauf eine mit dem Haftvlies (5) verbundene Haltemaffe (6) angeordnet ist, deren Oberseite Vertiefungen (7) aufweist, deren Größe mindestens etwa so groß ist wie die Korngröße einer wesentlichen Kornfraktion der Deckschüttung (11).

2. Anordnung nach Anspruch 1, dadurch gekennzeichnet, daß die Haftrauhigkeit der Oberfläche der Dichtbahn (2) durch damit verbundene, vorspringende Körper gebildet ist, deren mittlere Höhe unter 2 mm liegt.

3. Anordnung nach Anspruch 1 oder 2, dadurch gekennzeichnet, daß die Haftrauhigkeit der Oberfläche der Dichtbahn (2) durch damit verschweißte Sprühpartikeln (3, 4) gebildet ist.

4. Anordnung nach einem der Ansprüche 1 bis 3, dadurch gekennzeichnet, daß die der Dichtbahn (2) zugewendete Oberfläche des Haftvlieses (5) Fasern umfaßt, deren Durchmesser unter einem Drittel der mittleren Rauhtiefe der Rauhschicht (4) der Dichtbahn (2) liegt.

5. Anordnung nach einem der Ansprüche 1 bis 4, dadurch gekennzeichnet, daß die Haltematte (6) ein grobes Vlies oder Netz ist.

6. Anordnung nach Anspruch 5, dadurch gekennzeichnet, daß das Vlies oder Netz einen mittleren Faser- bzw. Strangabstand hat, der größer ist als die geringste wesentliche Korngröße der Deckschüttung (11).

7. Anordnung nach Anspruch 5 oder 6, dadurch gekennzeichnet, daß der mittlere Faserabstand der Haltematte mindestens 1 mm beträgt.

8. Anordnung nach einem der Ansprüche 1 bis 7, dadurch gekennzeichnet, daß die Haltematte (6) Prägevertiefungen (7) aufweist, deren Vertiefungsabmessungen größer sind als die geringste wesentliche Korngröße der Deckschüttung (11).

9. Anordnung nach Anspruch 8, dadurch gekennzeichnet, daß die Vertiefungsabmessungen parallel zur Mattenebene im Mittel mindestens 5 mm betragen.

10. Anordnung nach einem der Ansprüche 5 bis 9, dadurch gekennzeichnet, daß die die Oberseite der Haltematte (6) bildenden Fasern drahtartige Steifigkeit aufweisen.

11. Anordnung nach einem der Ansprüche 1 bis 9, dadurch gekennzeichnet, daß die Haltematte mindestens 10 mm dick und weich ist, nämlich durch 10 g/cm² um mindestens 5 mm zusammendrückbar.

12. Anordnung nach einem der Ansprüche 5 bis 11, dadurch gekennzeichnet, daß die Haltematte im entspannten Zustand ein Hohlraumvolumen von mindestens 90%, vorzugsweise mindestens 95%, aufweist.

13. Anordnung nach einem der Ansprüche 1 bis 12, dadurch gekennzeichnet, daß die Haltematte (6) und das Haftvlies (5) miteinander fest verbunden sind.

## Claims

1. Arrangement for covering the surface, which may be inclined, of loose material, in particular earth or rubbish dump material, which arrangement comprises a sealing course, which has an adhesive roughness at least at the upper side and is covered by a textile mat, and a top fill on top of this course, characterised in that the textile mat is formed as an adhesive nonwoven fabric (5), the open surface of the fabric which faces the sealing course comprising free fibres whose diameter is smaller than the peak-to-valley height of the sealing course surface (4), and a retaining mat (6), which is bonded to the adhesive nonwoven fabric (5), is arranged on the latter, the upper side of which mat comprises depressions (7) which are at least approximately as large as the particle size of a substantial particle fraction of the top fill (11).

2. Arrangement according to claim 1, characterised in that the adhesive roughness of the surface of the sealing course (2) is formed by projecting bodies which are bonded to the latter and the average height of which is less than 2 mm.

3. Arrangement according to claim 1 or 2, characterised in that the adhesive roughness of the surface of the sealing course (2) is formed by spray particles (3, 4) which are welded to this surface.

4. Arrangement according to one of claims 1 to 3, characterised in that the surface of the adhesive nonwoven fabric (5) which faces the sealing course (2) comprises fibres whose diameter is less than one third of the average peak-to-valley height of the rough layer (4) of the sealing course (2).

5. Arrangement according to one of claims 1 to 4, characterised in that the retaining mat (6) is a coarse nonwoven fabric or net.

6. Arrangement according to claim 5, characterised in that the nonwoven fabric or net has an average fibre or strand spacing which is greater than the smallest substantial particle size of the top fill (11).

7. Arrangement according to claim 5 or 6, characterised in that the average fibre spacing of the retaining mat is at least 1 mm.

8. Arrangement according to one of claims 1 to 7, characterised in that the retaining mat comprises stamped depressions (7) whose dimensions are greater than the smallest substantial particle size of the top fill (11).

9. Arrangement according to claim 8, characterised in that the average depression dimensions, measured parallel to the mat plane, are at least 5 mm.

10. Arrangement according to one of claims 5 to 9, characterised in that the fibres forming the upper side of the retaining mat (6) are of a wire-like rigidity.

11. Arrangement according to one of claims 1 to 9, characterised in that the retaining mat is at least 10 mm thick and soft, i.e. it can be compressed by at least 5 mm by 10 g/cm².

12. Arrangement according to one of claims 5 to 11, characterised in that the retaining mat has a cavity volume of at least 90%, preferably at least 95%, in the relaxed state.

13. Arrangement according to one of claims 1 to 12, characterised in that the retaining mat (6) and the adhesive nonwoven fabric (5) are firmly bonded together.

## Revendications

1. Agencement pour la couverture de la surface éventuellement inclinée de matériaux en vrac, en particulier de terre ou de déchets, qui comprend un panneau d'étanchéité à rugosité adhésive du moins sur le côté supérieur et recouvert d'une natte textile, et au-dessus de celui-ci un matériau de couverture en vrac, caractérisé en ce que la natte textile est réalisée en tant que nappe adhésive (5) dont la surface ouverte orientée vers le panneau d'étanchéité comprend des fibres libres dont le diamètre est inférieur à la profondeur de rugosité de la surface du panneau d'étanchéité (4), et en ce qu'au-dessus de celle-ci est agencée une natte de retenue (6) reliée à la nappe adhésive (5), le côté supérieur de ladite natte de retenue présentant des creux (7) dont la taille est approximativement au moins aussi grande que la taille de grain d'une fraction granulométrique essentielle du matériau de couverture en vrac (11).

2. Agencement selon la revendication 1, caractérisé en ce que la rugosité adhésive de la surface du panneau d'étanchéité (2) est formée par des corps saillants reliés à celle-ci, dont la hauteur moyenne est inférieure à 2 mm.

3. Agencement selon l'une ou l'autre des revendications 1 et 2, caractérisé en ce que la rugosité adhésive de la surface du panneau d'étanchéité (2) est formée par des particules pulvérisées (3, 4) soudées sur ladite surface.

4. Agencement selon l'une quelconque des revendications 1 à 3, caractérisé en ce que la surface de la nappe adhésive (5) orientée vers le panneau d'étanchéité (2) comprend des fibres dont le diamètre est inférieur à un tiers de la profondeur de rugosité moyenne de la couche rugueuse (4) du panneau d'étanchéité (2).

5. Agencement selon l'une quelconque des revendications 1 à 4, caractérisé en ce que la natte de retenue (6) est une nappe grossière ou un filet grossier.

6. Agencement selon la revendication 5, caractérisé en ce que la nappe ou le filet a un écartement moyen entre fibres ou entre torons qui est supérieur à la taille de grain essentielle la plus petite du matériau de couverture en vrac (11).

7. Revendication selon l'une ou l'autre des revendications 5 et 6, caractérisé en ce que l'écartement moyen entre fibres de la natte de retenue s'élève au moins à 1 mm.

8. Agencement selon l'une quelconque des revendications 1 à 7, caractérisé en ce que la natte de retenue (6) présente des creux d'impression (7) dont les dimensions de creux sont supérieures à la taille essentielle la plus petite de grain du matériau de couverture en vrac (11).

9. Agencement selon la revendication 8, caractérisé en ce que les dimensions de creux parallèlement au plan de natte s'élèvent en moyenne à au moins 5 mm.

10. Agencement selon l'une quelconque des revendications 5 à 9, caractérisé en ce que les fibres formant le côté supérieur de la natte de retenue (6) présentent une rigidité analogue à celle de fils métalliques.

11. Agencement selon l'une quelconque des revendications 1 à 9, caractérisé en ce que la natte de retenue est épaisse d'au moins 10 mm et en ce quelle est souple, à savoir elle peut être comprimée d'au moins 5 mm sous 10 g/cm².

12. Agencement selon l'une quelconque des revendications 5 à 11, caractérisé en ce que la natte de retenue présente à l'état détendu un volume de cavité d'au moins 90 %, de préférence d'au moins 95 %.

13. Agencement selon l'une quelconque des revendications 1 à 12, caractérisé en ce que la natte de retenue (6) et la nappe adhésive (5) sont fermement reliées l'une à l'autre.
